# EUROPEAN PATENT SPECIFICATION

(11) **EP 2 244 584 B1**
(45) Date of publication and mention of the grant of the patent: **08.06.2011**
(21) Application number: 09703713.9
(22) Date of filing: 23.01.2009
(51) Int. Cl.: A23K 1/02, A23K 1/06, A23K 1/14

(54) **PROCESS FOR PREPARING FEED AND FEED ADDITIVES OF ENHANCED NUTRITIVE VALUE FROM INDUSTRIAL BY-PRODUCTS CONTAINING VEGETABLE OILS**
VERFAHREN ZUR HERSTELLUNG VON NAHRUNGSMITTELN UND NAHRUNGSMITTELZUSÄTZEN VON ERHÖHTEM NÄHRWERT AUS INDUSTRIELLEN NEBENPRODUKTEN MIT PFLANZLICHEN ÖLEN
PROCÉDÉ DE PRÉPARATION D'ALIMENTS ET D'ADDITIFS ALIMENTAIRES DE VALEUR NUTRITIONNELLE AMÉLIORÉE À PARTIR DE SOUS-PRODUITS INDUSTRIELS CONTENANT DES HUILES VÉGÉTALES

(30) Priority: 23.01.2008 HU 0800044
(43) Date of publication of application: 03.11.2010
(73) Proprietor: Chemor Kutató, Fejlesztõ És Kereskedõ Kft., 7100 Szekszárd (HU); Pharmatéka BT., 1048 Budapest (HU)
(72) Inventor: ORBÁN, Gyula, H-2045 Törökbálint (HU); HUTÁS, István, H-1048 Budapest (HU)
(74) Representative: Szentpéteri, Adam
(86) International application number: PCT/HU2009/000009
(87) International publication number: WO 2009/093091

(56) References cited:
- WO-A-2004/020367
- WO-A-2008/116278
- US-A- 3 677 767
- US-A- 5 908 634

## Description

### TECHNICAL FIELD

The present invention relates to process for preparing feed and feed additives of enhanced nutritive value from industrial by-products containing vegetable oils, with especial regard to the available nitrogen content.

### BACKGROUND ART

Claim for animal protein which can be utilized in the nutrition has been increasing world-wide and thus, providing animal fee protein of suitable quality causes increasing problem as well. Recently, strong research took place in the field of the so-called non-protein nitrogen (NPN) materials, in the first line the possible highest utilization of urea in the feeding technology. However, results have not always been sufficient. It has been proved that in case of ruminants, the feed containing biologically strongly valuable proteins may be substituted with urea partly only. Namely, in the composite stomach of ruminants the urea dissociates to ammonia and carbon dioxide; in case of rapid dissociation the ammonia excess, getting into the blood stream may cause severe toxicosis, extremely also death.

Patent specification BG61248 relates to the preparation of feed additives in solid block forms. In the process, for ruminants, among others corn bran, urea, molasses and animal fats are used.

Similarly, USP 4,994,284 also discloses feed additives for ruminants. The invention relates to a liquid solution formulation containing molasses, urea and animal or vegetable fat.

HU202084 provides a process for preparing feed additive and protein substitute. According to this document, for decreasing the harmful ammonia level forming at decomposition of urea, feed of high carbohydrate content, such as molasses are used.

HU197185 discloses a process for preparing feed additive enhancing the utilization of protein-free nitrogen compounds. The additive comprises for example urea, molasses or vinasse and beet grist.

It is known that for the growth of microorganisms in the rumen of ruminants, organic carbon sources and nitrogen source are required. 90% of the protein content of the feed is decomposed into ammonia. The decomposition process is retarded in time and thus, even feeding with high protein quantities does not cause ammonia toxicosis at the animals.

One should, however, proceed very cautiously when using fully or partly urea as nitrogen source as the urease enzyme permanently present in the rumen is capable of decomposing the urea into ammonia already within half to one hour from the feeding which may cause liver damaging, toxicosis in the animals, considering that the toxic dosis of urea is about above 0,5 g/body kg. Therefore, it is obvious that the decomposition process should be retarded in the use of urea.

In foraging, as carbon source many materials containing cellulose and/or hemicellulose may be used. There are also different by-products, among others, corn bran used. It is desirable in any way that these carbon sources, which are preferable of high nutritional value, are also decomposed proportionally with the nitrogen source, in a steady way. It is also desired, however, that the decomposition of the generally used urea takes also place in a retarded way, proportionally with that of the carbon source.

The use of known vegetable oils or fats, suitably hydrogenated oils, is also well-known for those skilled in the art.

During use of the materials mentioned above, however, a number of problems have been raised. It is very important, for example, that the feed introduced as carbon source, does not have sufficient nutritional value and thus, higher amount thereof is needed, which in turn, limits the nutritional uptake. Another disadvantage is that at mixing the feed, serious problems may occur as the consistence of the feed is insufficient, and the sticky, lumpy feed is not attractive for the animals. The use of hydrogenated oils further enhances the problems: the use thereof, even at a relatively low quantity, further limits the manageability of the feed.

### DISCLOSURE OF THE INVENTION

The present invention aims to eliminate the above problems by providing a technology wherein from industrial and other by-products and urea used as nitrogen source feed or feed additive are produced, wherein the nitrogen release is retarded and proportional with the carbon source utilization, no toxic effect to the ruminants take place and at the same time, the feed and feed additive, respectively, is fully manageable, having suitable flowability.

The invention is based on the recognition that for retarded nitrogen release, the glucose-urea can primarily and excellently be used. The invention is further based on the recognition that, as carbon source component of high nutritional value, grits of oily seeds, especially the press cakes obtained in oil recovery, preferably the rape cake, most preferably their bran fractions can be used.

The glucose-urea (glucose-ureide) is known compound, the physical characteristics of which had been described by Helferich, B. and Kosche, W. already in 1926 (Berichte). In the compound, the aldehyde group of the sugar is in bond, thus losing its reducing ability.

Tests have been carried out to determine the in vitro urease cleavage of glucose-ureide as well as by in vivo on sheeps by administration of urea in a calculated toxic dosis. The test results which are shown in example 1, have shown that under in vitro conditions the glucose-ureide is very difficult to cleave, in contrast to the urea, while under in vivo conditions, no toxic blood level could be detected, thus the compound showed very good protrahed properties even in vitro.

Due to its very good retard effect, the glucose-ureide has proven an ideal agricultural product and additive respectively. On the other hand, manufacture of the compound in its pure form cannot be economical, due to the large-scale utilization thereof. Therefore, there is a need to provide a process for preparing the same, wherein the glucose-ureide is obtained in situ, while the product has a retard and non-toxic effect and provides at the same time and easily manageable, flowable product which thus, can easily be handled.

Considering the aforesaid, the invention also relates to providing a process which allows the valuable N-content of urea available in feeding animals at a higher level. In the products provided by the technology according to the invention the urea decomposes in the rumen of ruminants only slowly and thus production of ammonia in a toxic level is inhibited. This is called as "by pass" effect. It is desirable that this "by-pass" or retard (prolonged) effect proceeds proportionally and evenly along with the cellulose decomposition. That is, in ruminants most of the cellulose, hemicelluloses and proteins is decomposed in the rumen and thus, the microorganisms living therein can utilize these materials.

Formation of glucose-ureide, even under laboratory conditions, is a slow equilibrium reaction. It has been found that under large scale process, this reaction can substantially be accelerated and thus, from easily and simply available agricultural by-products an accelerated and simple reaction takes place. To achieve the above advantages, the invention relates to a process for preparing feed and feed additives of enhanced nutritive value from industrial by-products containing vegetable oils, such as grits of oily seeds and/or press cakes, wherein the grist of oily seeds and/or press cakes is mixed with urea, acidic vinasse and molasses, to the mixture hydrogenated fat and/or oils added and the mass thus obtained is homogenized with the grits of oily seeds and/or press cakes, preferably bran fractions.

### BEST MODE OF CARRYING OUT THE INVENTION

In the first step of the process according to the invention, urea, molasses and acidic vinasse are reacted, wherein due to the glucose content of the molasses, glucose-ureide is obtained; the reaction medium is provided by the water-content of the molasses (and partially that of the acidic vinasse). After partial progress of the reaction, yeast vinasse is added to the mixture, which contains autholized yeast; the enzyme content of the yeast vinasse serves as catalyst in the production of the glucose-ureide.

The acidic vinasse is a by-product of the agricultural industry, wherein the enzymes therein are inactivated, due to the low pH value. The acidic vinasse contains strong acid, suitably sulfuric acid; characteristic pH is at most 2, preferably about 1. Therefore, utilization of this by-product has been very limited while at the same time, deposition thereof caused serious troubles.

The reaction mixture obtained in the first reaction step according to the invention contains mostly molasses, vinasse, non-reacted urea, as well as glucose-ureide, in aqueous medium.

The next step of the technology comprises the hydrophobizing of the non-reacted urea with hydrogenated fat, to avoid the toxicosis caused by the rapid urease-decomposition of urea. This step is carried out by hydrophobizing with hydrogenated fat, which limits the availability of urea. Thus, the process provides a double-secured retard effect, by providing part of the urea in the form of glucose-ureide on one hand, and by inhibition of the enzymatic availability of the free urea on the other.

Addition of the hydrogenated fats to the aqueous mixture is a critical factor. That is, the viscosity of such compositions which can be used in the process is very high and thus, handling of such a complex mixture is very difficult, in the first line due to knobbing which influences the homogeneity and thus, availability of useful nitrogen sources of the mixture. It is especially difficult and was not solved so far, the preparation of a composition in which the above, mostly nitrogen-containing mixture, mixed with the carbon source to be added, formed an easy-handling, flowable mixture.

For the above purpose, according to the invention the extracted grits of oily plants containing max. 1-2% fats, and preferably cakes of oily seeds and bran fractions thereof, respectively, are used. Sources of such bran fractions are for example sunflower, soybean, corn and cereals, wherein most preferred are the suitable bran fractions of sunflower and rape, preferably with an oil content of max. 12%.

Those skilled in the art would have anticipated that in case of the use of bran fractions mixed product had become an amorphous, sticky mass. Surprisingly, it has been found that the bran fractions of oily seeds, which possessed a reduced oil content, can be covered by the mass also containing the hydrogenated fat that a flowable composition free from susceptibility of knobbing is obtained.

Accordingly, the present invention relates to a process for preparing feed and feed additives of enhanced nutritive value from industrial by-products containing vegetable oils, such as by the use of oil-containing grits and/or cakes, wherein the grits and/or cake are mixed with urea, acidic vinasse and molasses, after decrease of the glucose content of the molasses, enzyme active vinasse is added, to the mixture thus obtained hydrogenated fat and/or oil is added and the mass thus obtained is homogenized with the oil containing seed grit and/or cake, preferably bran fraction. In the process of the invention, as plant product, preferably rape bran, rape cake, sunflower grid, and sunflower cake are used.

According to a preferred embodiment of preparing the bran fraction the rape cake manufactured by high pressure oil pressing, which has an average oil content of 8 to 12%, is passed through a cascade of screens and the yellow flesh part is separated from the black bran part by screening. The yellow flesh part is rich in oil and protein but poor in fibers. This product provides an excellent feed for monogastric animals, preferably poultry, as the protein content is increased to 34% from 30% and the oil content is raised from 8 - 12% to 10 - 15%, while the fiber content decreases from 12-15% to 8-10%.

However, the preferred carrier used in the process according to the invention is the dark brown bran fraction still containing 25-27% protein, by the use of which in the technology, an ideal feed basic material valuable for ruminants is obtained.

According to a preferred embodiment of the invention, based on 100 weight units of industrial by-product containing oil, 1-14%, preferably 4,5-9% molasses, 1-6%, preferably 1,5-3,5% acidic vinasse, 1-9%, preferably 4-6,5% urea, 1-5,5, preferably 0,2-2,5% yeast-vinasse and 1-9%, preferably 3-6,5% hydrogenated fat and/or oil are used.

Animal experiments have been carried out to prove the significant differences between the natural urea and the "retard" composition prepared according to example 2 (Retard karbamid I) and example 3 (Retard karbamid II) in respect of the ammonia content of cattle rumen fluid.

It is well-known that in case of ruminants, the ammonia concentration increases in the 4th hour after feed uptake followed by a fast decrease. Exception under this rule is the feeding with nitrogen sources which promptly decompose in the rumen (NPN materials), in which case appearance of an "ammonia peak" appears very fast. However, the urea, due to the fast decomposition in the rumen even cannot be detected from the rumen content, for example in case of poisoning.

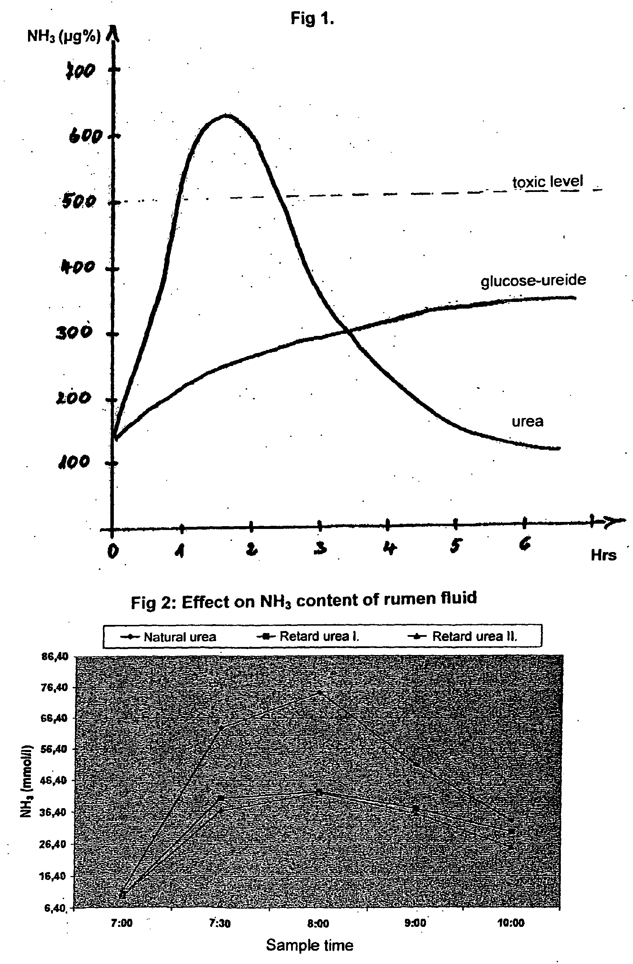

Our investigations have shown that the natural urea in the first 0,5 to 1 hour after feeding drastically increases the ammonia content of the rumen fluid (from 11,58 mol/l to 63,11-74,34 mol/l, see Figure 1). Thereafter, the ammonia value and effect thereof is already of less importance. The ammonia concentration of rumen strongly depends on the quantity and constitution of the feed taken up, but generally varies between 1 and 60 mmol/l. It is also well-known that the absorption of ammonia from the rumen is much faster than that of the ammonium ions.

Quick hydrolysis of urea and release of ammonia can be especially dangerous when the feed is easily digestible (fermentable) and has a low carbohydrate content. It should be noted that besides the easily fermentable carbohydrate sources (starch, sugar) also other materials, such as sulfur, phosphor and calcium, magnesium molybdenum and the like, respectively, are necessary for the protein synthesis from ammonia. The easily decomposing nitrogen sources administered in suitable quantity may promote the cellulose digestion in the rumen.

The process of the invention is illustrated by the following examples:

### Example 1

The in vitro decomposition of glucose-ureide by urease enzyme was examined by two different analytical methods. For the experiments, aqueous solution of urea was used as control.

### 1. Titration method

Aqueous solutions of urea and glucose-ureide calculated on identical nitrogen content were treated with parallel urease solutions. The decomposition reaction was carried out at 32°C, the degree of hydrolysis were controlled at 0, 30, 60, 90, 120, 150 and 210 minutes. Titration of the ammonia as deliberated was accomplished with 0,1 n hydrochloric acid in the presence of methyl red or groak indicators.

In each sample taken from the solutions containing the glucose-ureide also the reducing sugar contents were measured, but such contents could not be detected during the 210 minutes.

| 0,1 n hydrochloric acid (ml) | | | | | | | |
|---|---|---|---|---|---|---|---|
| | 0 min | 30 min | 60 min | 90 min | 120 min | 150 min | 210 min |
| urea (methyl red) | 2,5 | 11,7 | 12,4 | 14,0 | 14,5 | 15,0 | - |
| urea (groak) | 4,5 | 8,0 | 18,0 | 22,0 | 20,6 | 20,5 | - |
| glucose-ureide (methyl red) | 0,2 | 0,2 | 0,4 | 0,4 | 0,2 | 0,2 | 0,5 |
| glucose-ureide (groak) | 0,6 | 0,6 | 0,6 | 1,0 | 1,0 | 0,8 | 0,8 |

### 2. Measurement of ammonia concentration by ionselective membrane electrode

The reaction was carried out in pH=5,9 acetate buffer at 37°C, samples were taken at 0, 15, 30 and 60 minutes under conditions as at the titration experiments.

| urea | | | | | glucose-ureide | | |
|---|---|---|---|---|---|---|---|
| min | mV | mole | NH₃/l | min | mV | mole | NH₃/l |
| 0 | +32 | 1,0 . 10⁻⁴ | | 0 | +80 | 1,4 . 10⁻⁵ | |
| 15 | -50 | 2,8 . 10⁻³ | | 15 | +60 | 3,1 . 10⁻⁵ | |
| 30 | -63 | 4,5 . 10⁻³ | | 30 | +61 | 3,1 . 10⁻³ | |
| 60 | -75 | 7,6 . 10⁻³ | | 60 | +56 | 3,6 . 10⁻⁵ | |

The method used proved to be very selective and sensitive, suitable for determining the absolute ammonia concentration.

### Evaluation:

The results derived from both measurement methods provided the conclusion that under in vitro conditions (i.e. laboratory conditions closely similar to the physiological circumstances) the glucose-ureide was practically impossible to be cleaved by urease enzyme. On the contrary, under the identical conditions, urea has almost completely been decomposed.

### In vivo experiments with glucose-ureide

The experiments were carried out on sheep adapted to urea. However, before the tests, the animals were fed with feed with no urea. The daily feed consisted of 10-15 dkg fodder, ad libitum alfalfa hay and water. The animals were administered through sound with urea and glucose-ureide in doses corresponding to 0,7 g urea/kg body weight nitrogen equivalent.

After administration, ammonia concentration of the blood plasma were hourly determined during 6 hours. Measurements were accomplished from heparinized plasma by ammonia selective membrane electrode, immediately after taking the samples.

Mean blood ammonia levels are shown on Figure 1.

### Example 2

a) in a duplicator heated with hot water 1,85 kg acidic vinasse (VIPROTAL), 7,50 kg molasses and 5,20 kg urea were added and the mixture was stirred for 6 hours at 70°C. Afterwards, the mixture was cooled, 0,45 kg yeast vinasse was added and stirred for additional 4 hours. Then the mixture was fed into a duplicator containing 5 kg hydrogenated vegetable fat (Bewi-Spray-99-FA-Dakovit, manufacturer Bewital GmbH & Co., KG Südlohn-Oeding, DE) and stored in elevated temperature.
b) Rape cakes obtained from oil production and prepared by highpressure pressing (oil content 9,8%) were passed through a screen cascade and the yellow flesh was separated from the black bran fraction. Thus a bran fraction of 25-27% protein content was obtained and used in the next step.
c) In a high rotating mixer 80 kg of the bran fraction was mixed with the mixture obtained in step b. After homogenizing, a flowable, easy handling feed or feed additive was obtained.

The vinasse materials used were the followings:
Acidic vinasse: VIPROTAL, manufacturer Budafok Élesztö- és Szeszgyár Kft, Budapest, dry material content 68%, crude protein 46%. pH□2, adjusted by sulfuric acid;
Yeast vinasse: manufacturer Budafok Élesztö- és Szeszgyár Kft, Budapest, dry material content 60%, organic content 50%.

### Example 3

a) In a duplicator heated with hot water 2,5 kg acidic vinasse (VIPROTAL), 8 kg molasses and 4,60 kg urea were added and the mixture was stirred for 6 hours at 70°C. Afterwards, the mixture was cooled, 0,55 kg yeast vinasse was added and stirred for additional 4 hours. Then the mixture was fed into a duplicator containing 5 kg hydrogenated vegetable fat (Lactoplus-2000-Dakovit, manufacturer Bewital GmbH & Co., KG Südlohn-Oeding, DE) and stored in elevated temperature.
b) Rape cakes obtained from oil production and prepared by highpressure pressing (oil content 12%) were passed through a screen cascade and the yellow flesh was separated from the black bran fraction. Thus a bran fraction of 30-32% protein content was obtained and used in the next step.
c) In a high rotating mixer 80 kg of the bran fraction was mixed with the mixture obtained in step b. After homogenizing, a flowable, easy handling feed or feed additive was obtained.

The vinasse compositions used in the example were identical with those used in example 2.

## Claims

1. Process for preparing feed and feed additives from industrial by-products containing vegetable oils, such as by the use of oil-containing grits and/or cakes, wherein the grits and/or cake are mixed with urea, acidic vinasse and molasses, after decrease of the glucose content of the molasses, enzyme active vinasse is added to the mixture, to the mixture thus obtained hydrogenated fat and/or oil is added and the mass thus obtained is homogenized with the oil containing seed grit and/or cake, preferably bran fraction.

2. The process according to claim 1 wherein as plant material rape bran, rape cake, sunflower grit and sunflower cake are used.

3. The process according to claims 1 or 2, **characterized by** using 1-14% molasses, 1-6% acidic vinasse and 1-9% urea calculated on 100 weight unit of industrial by-products containing vegetable oils.

4. The process according to any of claims 1 to 3 **characterized by** using 4,5-9% molasses, 1,5-3,5% acidic vinasse and 4-6,5% urea calculated on 100 weight unit of industrial by-products containing vegetable oils.

5. The process according to any of claims 1 to 4 **characterized by** using 1,5-5% yeast vinasse calculated on 100 weight unit of industrial by-products containing vegetable oils.

6. The process according to any of claims 1 to 5 **characterized by** using 0,2-2,5% yeast vinasse calculated on 100 weight unit of industrial by-products containing vegetable oils.

7. The process according to any of claims 1 to 6 **characterized by** using 1-9% hydrogenated fat and/or oil calculated on 100 weight unit of industrial by-products containing vegetable oils.

8. The process according to any of claims 1 to 7 **characterized by** using 3-6,5% hydrogenated fat and/or oil calculated on 100 weight unit of industrial by-products containing vegetable oils.

## Patentansprüche

1. Verfahren zur Herstellung von Futter und Futter-Zusätze aus pflanzenölhaltigen industriellen Nebenprodukten, so unter Verwendung von ölhaltigen Bollen und/oder Kuchen, wobei die Bollen und/oder Kuchen mit Harnstoff, säurige Vinasse und Molassen gemischt werden, nach Verminderung der Glukose-Inhalt der Molassen, enzymeaktive Vinasse wird der Mischung zugegeben, der so entstehenden Mischung wird hydrierte Fett und/oder Öl zugegeben und die so enthaltene Masse wird mit den ölhaltigen Bollen und/oder Kuchen, vorzugsweise Kleiefraktion homogenisiert.

2. Verfahren nach Anspruch 1, wobei als Pflanzenmaterial Rapskleie, Rapskuchen, Sonnenblumenbolle und Sonnenblumenkuchen angewendet werden.

3. Verfahren nach Ansprüche 1 oder 2 **dadurch gekennzeichnet, dass** 1-14 % Molassen, 1-6 % säurige Vinasse und 1-9 % Harnstoff per 100 Gewichtseinheit pflanzenölhaltiger industrieller Nebenprodukt angewendet wird.

4. Verfahren nach Ansprüche 1-3 **dadurch gekennzeichnet, dass** 4,5-9 % Molassen, 1,5-3,5 % säurige Vinasse und 4-6,5 % Harnstoff per 100 Gewichtseinheit pflanzenölhaltiger industrieller Nebenprodukt angewendet wird.

5. Verfahren nach Ansprüche 1-4 **dadurch gekennzeichnet, dass** 1,5-5 % Hefevinasse per 100 Gewichtseinheit pflanzenölhaltiger industrieller Nebenprodukt angewendet wird.

6. Verfahren nach Ansprüche 1-5 **dadurch gekennzeichnet, dass** 0,2-2,5 % Hefevinasse per 100 Gewichtseinheit pflanzenölhaltiger industrieller Nebenprodukt angewendet wird.

7. Verfahren nach Ansprüche 1-5 **dadurch gekennzeichnet, dass** 1-9 % hydrierte Fett und/oder Öl per 100 Gewichtseinheit pflanzenölhaltiger industrieller Nebenprodukt angewendet wird.

8. Verfahren nach Ansprüche 1-5 **dadurch gekennzeichnet, dass** 3-6,5 % hydrierte Fett und/oder Öl per 100 Gewichtseinheit pflanzenölhaltiger industrieller Nebenprodukt angewendet wird.

## Revendications

1. Procédé pour la préparation du fourrage et des additifs de fourrage à partir des sous-produits industriels contenant des huiles végétales, ainsi par utilisation des grains broyés et/ou des restes oléagineux de pressurage, au cours duquel les grains broyés et/ou les restes oléagineux de pressurage sont mélangés avec de la carbamide, de la vinasse acidique et de la mélasse, une vinasse de levures d'activité enzymatique est ajoutée au mélange après la réduction du teneur en glucose de la mélasse, suivi par l'addition de la matière grasse et/ou de l'huile hydrogénée au mélange obtenu, et la pate obtenue est homogénisée avec des grains broyés et/ou des restes oléagineux de pressurage, de préférence avec la fraction du son.

2. Procédé selon la revendication 1, **caractérisé en ce que** le son du colza, le tourteau du colza, les grains broyés du tournesol, le tourteau du tournesol sont utilisés comme produits végétaux.

3. Procédé selon les revendications 1 ou 2, **caractérisé en ce que** la mélasse est utilisée en quantité entre 1-14 %, la vinasse acidique est utilisée en quantité entre 1-6 % et la carbamide est utilisée en quantité entre 1-9 % par rapport à la quantité des sous-produits industriels contenant 100 unité de masse d'huiles végétales.

4. Procédé selon l'une quelconque des revendications 1 à 3, **caractérisé en ce que** la mélasse est utilisée en quantité entre 4,5-9 %, la vinasse acidique est utilisée en quantité entre 1,5-3,5 % et la carbamide est utilisée en quantité entre 4-6,5 % par rapport à la quantité de sous-produits industriels contenant 100 unité de masse d'huiles végétales.

5. Procédé selon l'une quelconque des revendications 1 à 4, **caractérisé en ce que** la vinasse de levure est utilisée en quantité entre 1-5,5 % par rapport à la quantité de sous-produits industriels contenant 100 unité de masse d'huiles végétales.

6. Procédé selon l'une quelconque des revendications 1 à 5, **caractérisé en ce que** la vinasse de levure est utilisée en quantité entre 0,2-2,5 % par rapport à la quantité de sous-produits industriels contenant 100 unité de masse d'huiles végétales.

7. Procédé selon l'une quelconque des revendications 1 à 6, **caractérisé en ce que** la matière grasse et/ou de l'huile hydrogénée sont utilisées en quantité entre 1-9 % par rapport à la quantité de sous-produits industriels contenant 100 unité de masse d'huiles végétales.

8. Procédé selon l'une quelconque des revendications 1 à 7, **caractérisé en ce que** la matière grasse et/ou de l'huile hydrogénée sont utilisées en quantité entre 3-6,5 % par rapport à la quantité de sous-produits industriels contenant 100 unité de masse d'huiles végétales.
